**Europäisches Patentamt**

(19) **European Patent Office**

**Office européen des brevets**

(11) Numéro de publication : **0 118 353**
**B1**

(12) **FASCICULE DE BREVET EUROPÉEN**

(45) Date de publication du fascicule du brevet :
04.03.87

(21) Numéro de dépôt : **84400364.0**

(22) Date de dépôt : **23.02.84**

(51) Int. Cl.⁴ : **A 47 J 45/07**

(54) **Dispositif de montage d'une poignée amovible sur le corps d'un ustensile de cuisine.**

(30) Priorité : 28.02.83 FR 8303235
28.09.83 FR 8315398

(43) Date de publication de la demande :
12.09.84 Bulletin 84/37

(45) Mention de la délivrance du brevet :
04.03.87 Bulletin 87/10

(84) Etats contractants désignés :
AT BE CH DE FR GB IT LI LU NL SE

(56) Documents cités :
FR-A- 1 330 214
FR-A- 1 431 013
FR-A- 1 471 315
FR-A- 1 554 738
NL-A- 6 508 514
US-A- 2 712 151
US-A- 3 232 657
US-A- 3 269 765
US-A- 3 422 485

(73) Titulaire : **VERRERIE CRISTALLERIE D'ARQUES J.G.**
**DURAND & Cie**
**41, Avenue du Général de Gaulle**
**F-62510 Arques (FR)**

(72) Inventeur : **Durand, Philippe**
**Les Daneaux Chemin de la Garenne**
**F-62510 Arques (FR)**

(74) Mandataire : **Roger-Petit, Jean-Camille et ai**
**OFFICE BLETRY 2, Boulevard de Strasbourg**
**F-75010 Paris (FR)**

EP 0 118 353 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

## Description

La présente invention a pour objet un dispositif de montage d'une poignée amovible sur le corps d'un ustensile de cuisine, et notamment, bien que non exclusivement, d'un ustensile dont le corps est en verre à feu ou en céramique.

Le montage d'une poignée sur un récipient métallique est généralement obtenu, soit par une liaison qui exerce une traction sur un embout solidaire de la paroi du récipient, soit par une liaison entre la poignée et le corps du récipient au moyen d'une pièce rapportée, c'est-à-dire soudée, collée ou rivetée.

Ce dernier mode de montage est extrêmement difficile à réaliser sur le verre et la céramique avec une bonne sûreté de liaison. Quant à la liaison exerçant une traction, elle ne peut pas être employée dans le cas d'un récipient en verre ou en céramique, du fait que ces matériaux résistent mal à la traction compte tenu de la présence de microfissures internes.

Pour des récipients en porcelaine ou en verre, on connaît des accrochages réalisés par l'intermédiaire d'un bandeau en général métallique ceinturant le corps du récipient. Les inconvénients sont une esthétique moyenne, un lavage difficile dû aux interstices entre le bandeau et le corps, des contraintes pour le moulage du corps.

Des récipients monobloc en verre ou en céramique sont également commercialisés. Les inconvénients en sont la fragilité du manche aux chocs, la difficulté de fabrication, l'isolation thermique moins sûre du manche et le fait qu'en général ces récipients sont moins esthétiques et moins fonctionnels, le manche étant situé tout en haut du corps du récipient.

D'autres systèmes, employés en particulier pour des plats et des cocottes, font appel à des poignées de type pinces qui s'accrochent sur des oreilles prévues sur le corps du récipient. Cependant, l'accrochage est très moyen, l'esthétique est douteuse, et l'on n'obtient pas réellement une casserole.

Une première amélioration a été apportée par les brevets français 1 431 013 du 26 janvier 1965 et 1 554 738 du 26 octobre 1967, qui prévoient des excroissances de verre façonnées en même temps que le corps est fabriqué et présentant une cavité dans laquelle la partie mâle de la poignée s'encastre ; une lamelle coulissante assure le verrouillage.

Ce perfectionnement, de par la forme de l'excroissance (par exemple en queue d'aronde suivant FR-1 431 013), présente des difficultés de fabrication principalement dues aux retraits du verre au cours du refroidissement de l'objet.

De plus, ce mode de réalisation impose l'emplacement de l'excroissance au niveau supérieur de la casserole (comme dans le cas des casseroles monobloc), ce qui nuit à l'esthétique et au côté fonctionnel de l'objet (mauvais équilibre).

Du NL-A-6 508 514 est connu un dispositif de montage d'une poignée amovible sur le corps d'un ustensile de cuisine, comprenant un embout formé sur la paroi latérale du corps de l'ustensile, un logement prévu dans l'extrémité de raccordement de la poignée et dans lequel ledit embout est susceptible d'être inséré à frottement doux, et un dispositif de verrouillage comprenant une pièce pivotante dont une extrémité est en forme de bec et des moyens susceptibles de faire pivoter cette pièce et agencés pour amener son extrémité en forme de bec sur l'embout et pour verrouiller la pièce dans cette position ou pour la déverrouiller, lors du montage ou du démontage de la poignée, ledit embout, dans la position de verrouillage, étant soumis à une compression entre ladite pièce pivotante et la face inférieure du logement prévu dans l'extrémité de raccordement de la poignée. Le brevet des USA 2 712 151 décrit un dispositif comparable, dans lequel, en outre, la face supérieure de l'embout présente une encoche, l'extrémité en forme de bec de la pièce pivotante est recourbée de façon à pouvoir s'insérer dans l'encoche de l'embout, et le dispositif de verrouillage est monté dans le logement prévu dans l'extrémité de raccordement de la poignée.

La présente invention a pour but de pallier les inconvénients des brevets français précités et de rendre le dispositif de verrouillage plus sûr, plus pratique et plus esthétique que celui prévu dans les brevets antérieurs précités néerlandais et des USA. A cet effet, elle a pour objet un dispositif de montage d'une poignée amovible sur le corps d'un ustensile de cuisine, présentant les particularités de structure susindiquées des dispositifs selon lesdits brevets néerlandais et des USA et caractérisé en ce que ladite pièce pivotante est une bielle en forme de cliquet située à une extrémité d'un ensemble de bielles appelé genouillère, en ce que lesdits moyens de verrouillage sont constitués par les autres bielles dudit ensemble, l'une de ces bielles en forme de gâchette faisant office de levier de verrouillage fonctionnant à l'encontre de l'action d'un ressort de renvoi, et en ce qu'il est prévu un bouton-poussoir de déverrouillage qui, lorsqu'il est poussé, exerce une pression vers le bas sur le levier de verrouillage, ce qui déclenche la rupture de l'arc-boutement des bielles de la genouillère.

L'embout est soumis à une contrainte de compression dans son épaisseur, ce qui est particulièrement favorable lorsqu'il est en verre ou en céramique, ces matériaux résistant à des compressions extrêmement importantes, mais résistant mal à des contraintes de traction.

Ladite encoche de l'embout et ladite pièce pivotante ont, respectivement, une longueur et une largeur suffisantes pour que la liaison embout-poignée soit solide.

Lorsque le corps de l'ustensile est en verre ou en céramique, l'embout en même matière est avantageusement venu de moulage avec le corps, comme prévu dans le brevet français précité 1 431 013. Il peut être placé à un niveau différent du bord supérieur du corps, ce qui améliore l'esthétique et facilite la manipulation de l'ustensile. Il est avantageusement de forme ramassée et compacte (ses trois dimensions sont alors sensiblement identiques) facilitant le nettoyage, conservant (en l'absence de la poignée) une bonne esthétique, et présentant une meilleure résistance aux chocs ainsi qu'aux contraintes développées par la liaison poignée-corps de l'ustensile. De plus, l'encoche de verrouillage se trouvant sur la face supérieure de l'embout, elle est libérée de tout contact, aussitôt après le pressage exercé lors de la fabrication du corps de l'ustensile et de son embout par moulage ; ceci assure à l'ensemble moulé un retrait sans contrainte et facilite donc grandement la fabrication.

De préférence, l'embout et son logement dans la poignée ont une forme générale parallélépipédique, l'emboîtement étant ainsi sans rotation possible autour de l'axe de la poignée, ce qui offre une parfaite sécurité lorsqu'on manipule l'ustensile rempli, pour le déplacer, ou verser son contenu, par exemple. De préférence également, pour assurer une liaison plus robuste entre le corps de l'ustensile et la poignée, ladite encoche est formée sur la face supérieure de l'embout, le long de la ligne de raccordement de celui-ci avec la paroi latérale du corps de l'ustensile ; l'embout résiste ainsi mieux à la force de torsion verticale exercée par la poignée.

La poignée peut être en tout matériau habituellement utilisé, suffisamment robuste et avantageusement thermiquement isolant ; on peut citer la bakélite, entre autres.

Selon un perfectionnement, le dispositif de montage considéré comprend en outre un mécanisme de blocage de sécurité de la poignée en position verrouillée, consistant en un bouton-poussoir de déverrouillage de structure particulière comprenant un pêne de forme générale parallélépipédique, qui présente, dans sa région antérieure, une face supérieure saillante cylindrique et une face inférieure tronconique, et qui présente sur un côté une face latérale légèrement concave dont la courbe a pour centre l'axe d'articulation de la gâchette sur la poignée, et consistant en outre en un logement de forme coopérante pour ce bouton-poussoir dans la gâchette, ce logement comprenant un évidement transversal tronconique qui présente un décrochement et est prolongé par un évidement cylindrique lui-même raccordé par une rampe à la partie supérieure de la gâchette, ledit pêne actionnable par la tête du bouton-poussoir pouvant tourner, après le verrouillage de la poignée, dans l'évidement tronconique par sa face inférieure tronconique, jusqu'à ce qu'il s'engage et bute par sa face supérieure saillante cylindrique dans ledit décrochement de l'évidement tronconique, pour assurer un blocage de sécurité de la poignée en position verrouillée. La poignée se comporte alors comme une poignée fixe ; le bouton-poussoir ne peut plus être enfoncé suivant son axe dans la gâchette, qui ne peut donc plus être déverrouillée ; l'ensemble du dispositif est immobilisé.

Ce perfectionnement a pour but de sécuriser les utilisateurs et aussi de prolonger la durée d'utilisation de la poignée amovible, qui peut être commune à plusieurs récipients, tels que des casseroles de cuisine ; en effet, lorsque la pression de serrage devient insuffisante avec l'usure de la genouillère, celle-ci ne reste pas en position bloquée, mais on peut empêcher le déblocage en mettant en service le mécanisme de blocage de sécurité.

Pour déverrouiller, il suffit de faire subir au bouton-poussoir une rotation en sens inverse, jusqu'à ce qu'il puisse à nouveau être enfoncé dans la gâchette.

Différents modes de réalisation du dispositif de verrouillage sont possibles. Trois variantes sont décrites ci-après, à titre d'exemples purement indicatifs et nullement limitatifs, en référence au dessin annexé sur lequel :

Les figures 1 à 3 sont des vues, respectivement en coupe verticale longitudinale avant verrouillage, en coupe verticale longitudinale après verrouillage, et en coupe horizontale partielle de la poignée seule, d'une première forme d'exécution du présent dispositif de montage d'une poignée amovible sur le corps d'un ustensile de cuisine, tel qu'une casserole, sauteuse, poêle ou similaire.

Les figures 4 à 6 sont des vues semblables aux figures 1 à 3 d'une seconde forme d'exécution.

La figure 7 est une vue en coupe verticale longitudinale partielle d'une troisième variante, avant verrouillage de la poignée qui est amovible.

La figure 8 est une vue analogue après verrouillage.

La figure 9 est une vue en élévation de côté de cette variante montrant le bouton-poussoir en position de blocage de sécurité.

La figure 10 est une vue en coupe verticale longitudinale partielle correspondant à la figure 9.

La figure 11 est une vue en plan par-dessus, partie en coupe, montrant le bouton-poussoir en position de repos, la poignée étant verrouillée, mais sans blocage de sécurité.

La figure 12 est une vue en coupe partielle correspondant à la figure 11 montrant le bouton-poussoir en position de déverrouillage.

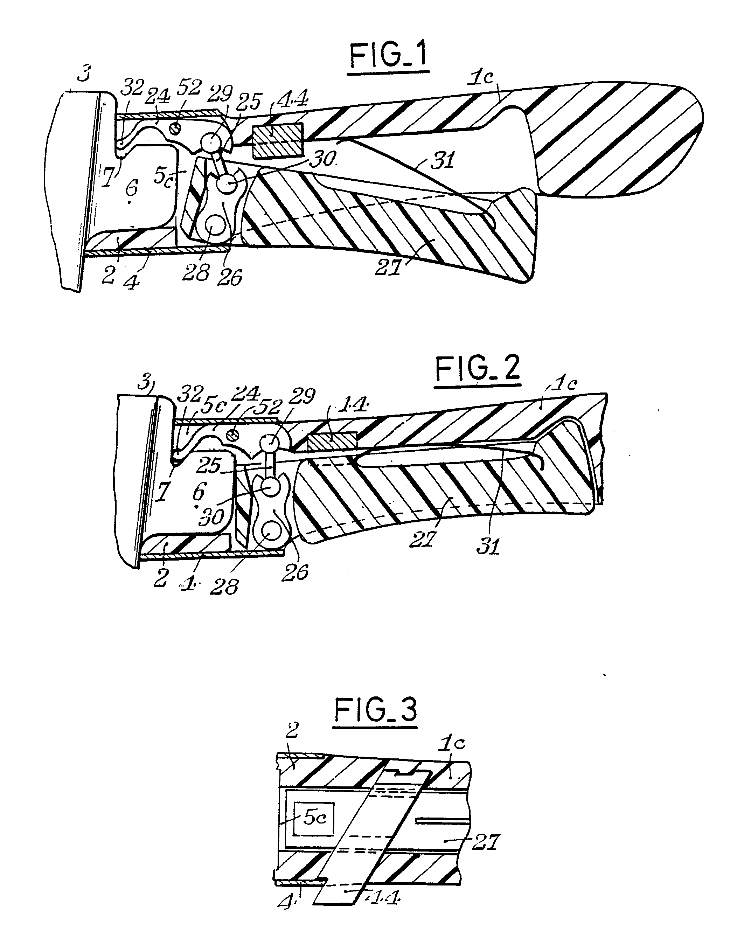

Le dispositif suivant les figures 1 à 12 comprend une poignée 1c, 1d, 1f, par exemple en bakélite, dont l'extrémité de raccordement 2 avec le corps 3 d'un ustensile de cuisine, qui est par exemple en verre à feu, est entourée d'un carénage 4, par exemple métallique, et présente un logement 5c, 5d, 5f, destiné à recevoir un embout 6, solidaire de la paroi latérale du corps 3 de l'ustensile. Cet embout peut être venu de moulage, lorsque le corps de l'ustensile est en verre ou en céramique. Il a une forme générale parallélépipédique compacte. Il est situé au-dessous du niveau supérieur du corps 3 et il présente, sur sa face supérieure, une encoche 7, qui est formée de préférence, comme représenté, le long de la ligne de raccordement de l'embout avec la paroi latérale du corps de l'ustensile.

Le dispositif de verrouillage et de blocage de la poignée 1c, 1d, 1f sur le corps de l'ustensile par l'intermédiaire de l'embout 6 de celui-ci est situé dans le logement 5c, 5d, 5f prévu à l'extrémité de la poignée.

Les figures 1 à 3 illustrent le dispositif de montage d'une poignée amovible particulière 1c sur l'embout 6 du corps 3 d'un ustensile de cuisine. La pièce pivotante est une bielle en forme de cliquet 24 faisant partie d'un ensemble de bielles appelé genouillère, qui est monté dans le logement 5c prévu dans la poignée. Cet ensemble comprend les deux autres bielles 25 et 26, cette dernière étant solidaire d'un levier de manœuvre en forme de gâchette 27. La bielle 24 est articulée autour d'un axe fixe 52 et la bielle 26 est articulée autour d'un axe fixe 28. La bielle intermédiaire 25 relie les bielles 24 et 26 en étant articulée dans les extrémités en regard de ces deux bielles, suivant deux axes mobiles 29 et 30. Le levier de manœuvre 27 est actionnable à l'encontre de l'action d'un ressort 31, qui peut être un fil ou une lame, dont une extrémité est fixée dans le levier 27 et dont l'autre extrémité prend appui et peut se déplacer contre une face du logement 5c.

En position déverrouillée (figure 1), le ressort 31 maintient le levier de manœuvre 27 en position abaissée. Les bielles sont alors en position telle que l'extrémité antérieure 32 recourbée en bec de la bielle 24 est en position haute. On peut alors engager à frottement doux et à fond l'extrémité de raccordement 2 de la poignée 2c sur l'embout 6. En serrant ensuite les doigts autour de la poignée, on fait remonter le levier de manœuvre 27 à l'encontre de l'action du ressort 31 ; le levier, qui pivote autour de l'axe fixe 28, transmet son mouvement à la bielle 26, qui entraîne le déplacement de la bielle 25 et le pivotement de la bielle 24 autour de l'axe fixe 52 avec, pour conséquence, l'abaissement du bec 32 de cette bielle 24, jusqu'à ce qu'il prenne appui sur le fond de l'encoche 7 de l'embout 6 (figure 2). Le blocage en position de verrouillage résulte d'un effet d'arc-boutement de la genouillère, qui est obtenu lorsqu'il y a alignement de l'axe de pivotement fixe 28 et des axes de pivotement mobiles 29 et 30.

Pour permettre le déverrouillage, il est prévu sur la poignée un bouton-poussoir latéral 44, qu'il faut enfoncer tout en cessant d'exercer une pression avec les doigts sur le levier de manœuvre 27 et dont le déplacement le long d'une rampe inclinée de façon connue en soi a pour effet de rompre l'arc-boutement des bielles de la genouillère, en forçant le levier de manœuvre 27 à s'abaisser, avec l'effet complémentaire du ressort de renvoi 31 (figure 1). Le bouton-poussoir est lié à un ressort de rappel non représenté, qui le renvoie à sa position de repos lorsqu'on le lâche.

La genouillère permet donc d'obtenir un serrage et simultanément un blocage automatique. Cet effet de bielles, utilisé dans de nombreux montages mécaniques, n'a encore jamais été appliqué à la liaison d'une poignée à un corps de récipient. Il présente dans ce cas les avantages suivants : poignée amovible, grande force de serrage du fait de la démultiplication due à la genouillère, grande sécurité de fixation par auto-blocage du système (donc stabilité en position fermée), facilité d'emploi (la position stable à vide étant uniquement la position ouverte, c'est-à-dire la position d'utilisation immédiate, et le verrouillage et le déverrouillage s'effectuant sans effort d'une seule main), et serrage et blocage assurés automatiquement par le seul fait de prendre la poignée dans la main, sans possibilité de manœuvre de déblocage involontaire. Ce mode de réalisation apparaît donc particulièrement favorable. Il est en plus esthétique, puisqu'en position fermée, rien, hormis le bouton-poussoir latéral, ne distingue la présente poignée amovible d'un manche habituel de casserole.

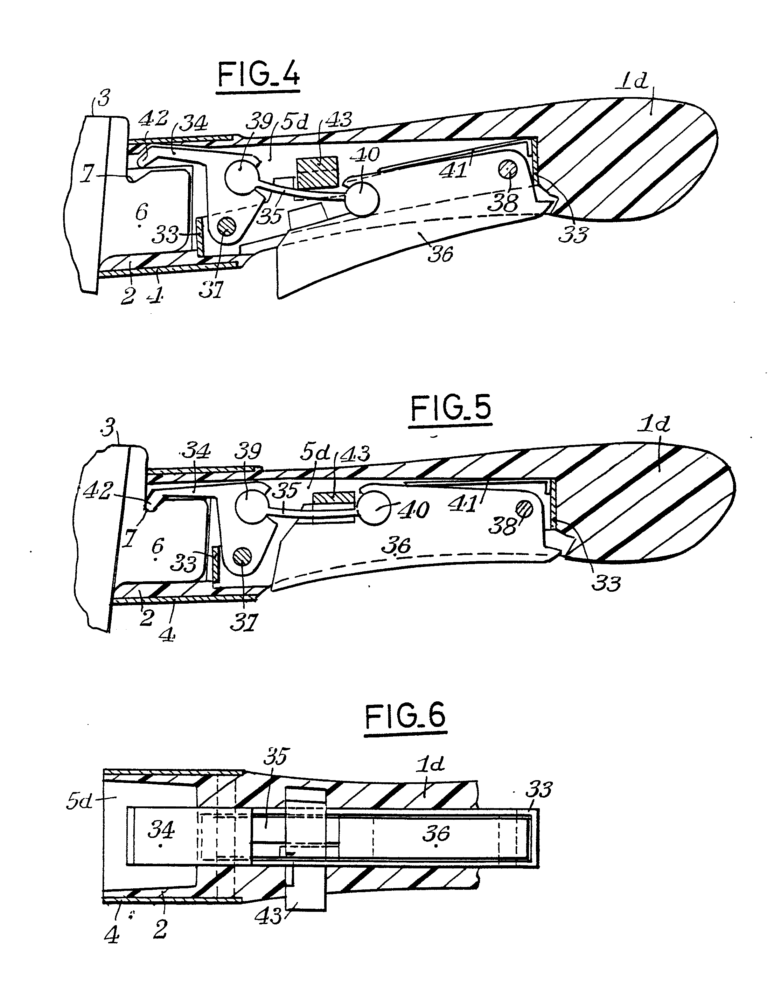

Le mode de réalisation suivant les figures 4 à 6 est basé sur le même principe de la genouillère. Dans le logement 5d de la poignée 1d est inséré un support 33, sur lequel est montée la genouillère, qui comprend les bielles 34, 35 et 36, cette dernière étant simultanément un levier de manœuvre. La bielle 34 est articulée autour d'un axe fixe 37 et le levier de manœuvre 36 est articulé autour d'un axe fixe 38, tandis que la bielle 35, qui relie les deux autres bielles, est articulée dans des logements en regard de celles-ci autour d'axes mobiles 39 et 40. La bielle arrière ou levier de manœuvre 36 pivote à l'encontre de l'action d'un ressort de renvoi 41.

Comme pour la réalisation précédemment décrite, le montage de la poignée 1d sur l'embout 6 d'un corps d'ustensile 3 est effectué lorsque le levier de manœuvre 36 est en position abaissée. On engage alors à fond et à frottement doux l'extrémité de raccordement 2 de la poignée sur l'embout 6 (figure 4). La bielle 34 est en position relevée. On effectue le verrouillage et le blocage comme précédemment, en ramenant par une pression des doigts le levier de manœuvre 36 en position haute à l'intérieur de la poignée (figure 5). Ce mouvement a entraîné l'abaissement du bec antérieur 42 de la bielle 34, ce bec venant s'appuyer sur le fond de l'encoche 7 de l'embout 6. L'effet d'arc-boutement de la genouillère est obtenu, lorsqu'il y a alignement de l'axe fixe 38 et des axes mobiles 39 et 40.

Le déverrouillage s'obtient, comme pour le mode de réalisation précédent, par l'enfoncement d'un bouton-poussoir latéral 43 avec simultanément l'absence de pression sur le levier de manœuvre 36. Le bouton-poussoir rompt l'arc-boutement des bielles de la genouillère en forçant le levier de manœuvre à s'abaisser, sous l'action conjuguée du ressort de renvoi 41. Les bielles sont alors ramenées dans leur position de déverrouillage (figure 4). Le bouton-poussoir est lié à un ressort de rappel non représenté, qui le renvoie à sa position de repos lorsqu'on le lâche.

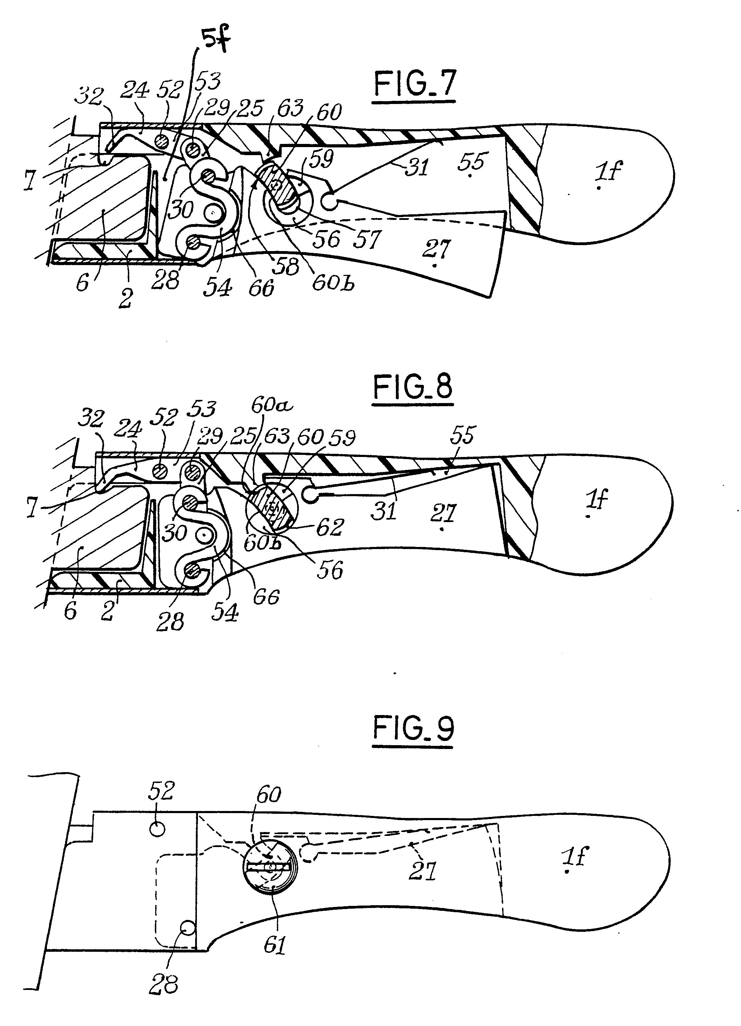

La poignée 1f (figures 7 à 12) d'un récipient tel qu'une casserole de cuisine est un profilé creux logeant le dispositif de verrouillage de la poignée sur un embout 6 du récipient. La poignée 1f est comparable à la poignée 1c des figures 1 à 3, en ce qui concerne le dispositif de verrouillage, qui comprend un ensemble de bielles appelé genouillère.

Le verrouillage s'effectue par l'engagement de l'extrémité courbée 32 d'une bielle en forme de cliquet 24 dans une encoche 7 de l'embout 6. Ce cliquet pivote autour d'un axe fixe 52 traversant la partie de raccordement de la poignée 1f au récipient. L'autre extrémité 53 du cliquet 24 est montée sur l'axe mobile 29 de deux biellettes 25 placées de part et d'autre du cliquet 24. Ces biellettes 25 sont reliées par un second axe mobile 30 à l'une des extrémités courbées de deux ressorts 54 en double S, qui sont logés avec un certain jeu dans deux rainures 66 prévues à l'avant et de chaque côté d'une gâchette 27 logée dans un évidement 55 de la poignée. Ces ressorts 54 sont ainsi solidaires de la gâchette qui peut pivoter autour d'un axe fixe 28 (sur lequel est aussi montée la seconde extrémité des ressorts 54), à l'encontre d'un ressort 31. L'axe 28 traverse la poignée et la gâchette. L'ensemble du cliquet 24, de la bielle 25 et de la gâchette 27 portant les ressorts 54 constitue une genouillère.

L'axe mobile 30 traverse la gâchette 27, au sommet de la région antérieure de celle-ci, par une lumière non représentée qui permet à cet axe un jeu vertical assez important (par exemple de 2 à 3 millimètres). Les déplacements de l'axe 30 sont transmis intégralement à l'axe mobile 29 par les biellettes rigides 25 puis, par le cliquet 24 tournant autour de l'axe 52, ils sont également transmis au bec 32 de ce cliquet avec une amplitude multipliée conformément au rapport des deux parties du cliquet de part et d'autre de l'axe fixe 52.

Les ressorts 54, dont une extrémité est liée à l'axe 30, ont une courbure calculée pour que cet axe soit en permanence repoussé vers le haut de ladite lumière permettant le jeu de l'axe 30 ; on obtient ainsi, quand on ferme la genouillère, un verrouillage correct même avec des différences de l'ordre de quelques millimètres de l'épaisseur de l'embout 6 au fond de l'encoche 7. Cette possibilité de variation de l'épaisseur de l'embout facilite la fabrication du récipient.

La gâchette 27 présente en arrière de son axe d'articulation 28 sur la poignée 1f un évidement transversal tronconique 56 prolongé par un évidement cylindrique 57 lui-même raccordé par une rampe 58 à la région haute de la gâchette. La partie tronconique 56 présente en fin de course un décrochement 59.

Cet évidement 56, 57 sert de logement à un bouton-poussoir particulier, constitué d'un pêne 60 de forme générale parallélépipédique solidaire d'une pièce de manœuvre 61, qui peut être un bouton, une tête de vis ou d'écrou simple ou à oreilles traversant le flanc de la poignée. Ce pêne présente, dans sa région antérieure, une face supérieure saillante 60a cylindrique et une face inférieure 62 tronconique qui vient s'appuyer sur l'évidement tronconique 56 de la gâchette 27 (figures 8 et 10 à 12). Il est également incurvé sur une face latérale 60b suivant un rayon dont le point de rotation est l'axe 28 d'articulation de la gâchette sur la poignée. Un ressort de rappel 64 est associé au bouton-poussoir.

En position libre de la poignée, le pêne 60 n'est pas engagé dans le logement 56, 57 et le cliquet 24 est flottant (figure 7).

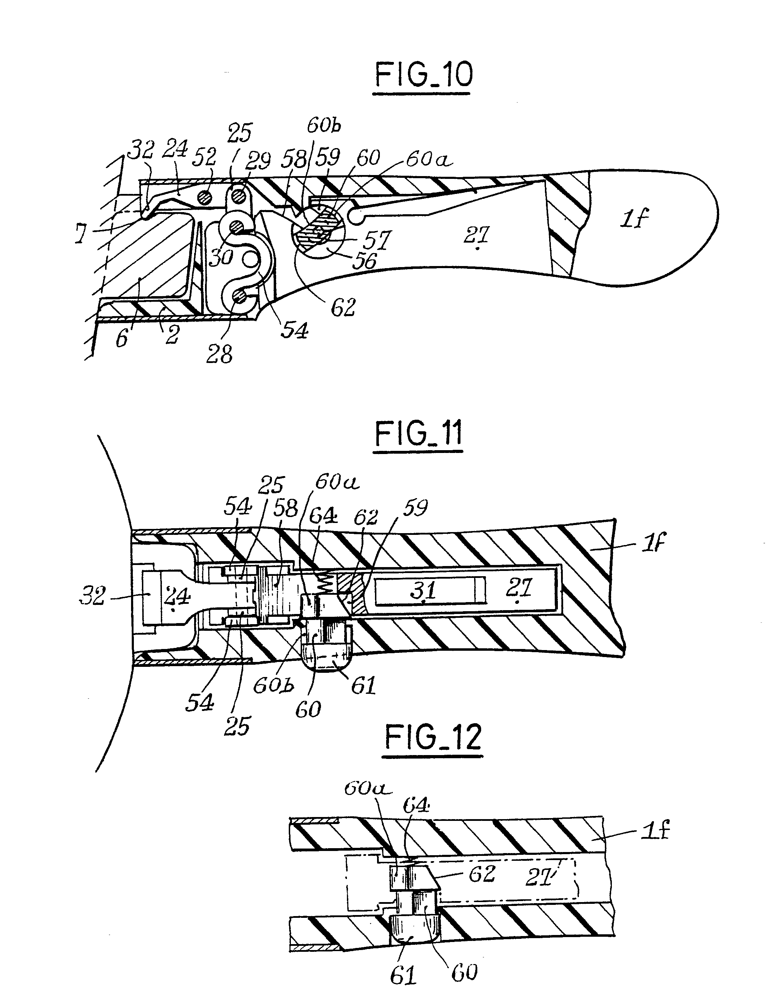

Pour verrouiller le cliquet 24 et par suite la poignée, on fait tourner la gâchette 27 dans l'évidement 55 de la poignée 1f ; le pêne 60 s'engage alors complètement dans les évidements 56 et 57 jusqu'à venir en butée sur un brossage 63 de la poignée (figure 8). L'enfoncement de la gâchette 27 dans l'évidement 55 a pour effet de faire basculer l'extrémité 32 du cliquet 24 dans l'encoche 7 de l'embout 6 par l'intermédiaire des biellettes 25, ce qui verrouille la poignée sur le récipient (figures 8 et 11).

En faisant tourner le bouton 61 d'un quart de tour vers la droite (figures 9 et 10), mouvement au cours duquel sa face inférieure 62 tronconique tourne dans l'évidement tronconique 56, le pêne 60 tombe et bute par sa face saillante 60a cylindrique dans le décrochement 59 de l'évidement tronconique, ce qui bloque la gâchette dans la position verrouillée de la poignée. Ainsi le bouton-poussoir à structure particulière et les évidements coopérants de son logement dans la gâchette constituent un mécanisme de blocage de sécurité de la poignée.

Si l'on n'a pas fait tourner le bouton 61 d'un quart de tour, et si l'on appuie sur ce bouton à l'encontre de l'action du ressort 64, (figure 12), on provoque le glissement de la partie tronconique 62 du pêne 60 sur la partie tronconique 56 de l'évidement de la gâchette, ce qui, en exerçant une pression vers le bas sur la gâchette, libère celle-ci en position de la figure 16 ; la poignée est déverrouillée. Grâce au ressort de rappel 64, le bouton-poussoir revient à sa position initiale.

Ce dispositif présente l'avantage d'une sécurité absolue, l'encliquetage de la poignée sur l'embout du récipient étant à la fois verrouillé par l'effet de genouillère et la butée du pêne contre un bossage de la poignée et bloqué par la rotation du bouton de sécurité qui fait tomber le pêne dans une cavité de l'évidement de la gâchette.

Pour passer de la position gâchette bloquée à la position gâchette débloquée, il faut tourner le bouton 61 d'un quart de tour vers la gauche. Le déverrouillage de la genouillère s'obtient alors par une simple poussée sur le bouton de sécurité.

**Revendications**

1. Dispositif de montage d'une poignée amovible sur le corps d'un ustensile de cuisine, comprenant un embout (6) formé sur la paroi latérale du corps (3) de l'ustensile, un logement (5c, 5d, 5f) prévu dans l'extrémité de raccordement (2) de la poignée (1c, 1d, 1f) et dans lequel ledit embout est susceptible d'être inséré à frottement doux, et un dispositif de verrouillage monté dans ledit logement et comprenant une pièce pivotante et des moyens susceptibles de faire pivoter cette pièce, la face supérieure de l'embout (6) présentant une encoche (7), la pièce pivotante (24, 34) ayant une extrémité recourbée en bec (32, 42) susceptible de s'insérer dans l'encoche de l'embout, et les moyens susceptibles de faire pivoter ladite pièce étant agencés pour amener son extrémité recourbée dans l'encoche et pour verrouiller la pièce dans cette position ou pour la déverrouiller, lors du montage ou du démontage de la poignée, ledit embout (6), dans la position de verrouillage, étant soumis à une compression entre ladite pièce pivotante et la face inférieure du logement (5c, 5d, 5f) prévu dans l'extrémité de raccordement (2) de la poignée, caractérisé en ce que ladite pièce pivotante est une bielle en forme de cliquet (24 ou 34) située à une extrémité d'un ensemble de bielles appelé genouillère, en ce que lesdits moyens de verrouillage sont constitués par les autres bielles (25, 26, 27 ; ou 35, 36 ; ou 25, 54, 27) dudit ensemble, l'une de ces bielles en forme de gâchette (27 ou 36) faisant office de levier de verrouillage fonctionnant à l'encontre de l'action d'un ressort de renvoi (31 ou 41), et en ce qu'il est prévu un bouton-poussoir de déverrouillage (44 ou 43 ou 61) qui, lorsqu'il est poussé, exerce une pression vers le bas sur le levier de verrouillage, ce qui déclenche la rupture de l'arc-boutement des bielles de la genouillère.

2. Dispositif suivant la revendication 1, caractérisé en ce qu'il comprend en outre un mécanisme de blocage de sécurité de la poignée (1f) en position verrouillée, consistant en un bouton-poussoir de déverrouillage (61-60) de structure particulière comprenant un pêne (60) de forme générale parallélépipédique, qui présente, dans sa région antérieure, une face supérieure saillante (60a) cylindrique et une face inférieure (62) tronconique, et qui présente sur un côté une face latérale légèrement concave (60b) dont la courbe a pour centre l'axe d'articulation (28) de la gâchette (27) sur la poignée, et consistant en outre en un logement de forme coopérante pour ce bouton-poussoir dans la gâchette (27), ce logement comprenant un évidement transversal tronconique (56) qui présente un décrochement (59) et est prolongé par un évidement cylindrique (57) lui-même raccordé par une rampe (58) à la partie supérieure de la gâchette, ledit pêne (60), actionnable par la tête (61) du bouton-poussoir, pouvant tourner, après le verrouillage de la poignée, dans l'évidement tronconique (56) par sa face inférieure (62) tronconique, jusqu'à ce qu'il s'engage et bute par sa face supérieure saillante (60a) cylindrique dans ledit décrochement (59) de l'évidement tronconique, pour assurer un blocage de sécurité de la poignée en position verrouillée.

3. Dispositif suivant la revendication 2, caractérisé en ce que la tête (61) du bouton-poussoir est en forme de bouton, de tête de vis ou de tête d'écrou simple ou à oreilles faisant saillie sur le côté de la poignée (1f).

4. Dispositif suivant la revendication 2 ou 3, caractérisé en ce qu'un ressort de rappel (64) est associé au bouton-poussoir (61-60).

5. Dispositif suivant l'une quelconque des revendications 1 à 4, caractérisé en ce que son ensemble de bielles appelé genouillère comprend, comme bielles constituant les moyens de verrouillage, deux biellettes (25) articulées par un premier axe mobile (29) sur l'arrière du cliquet (24) de part et d'autre de celui-ci, et deux ressorts (54) en double S reliés par une de leurs extrémités courbées à l'extrémité postérieure des biellettes (25) par l'intermédiaire d'un second axe mobile (30), ces deux ressorts étant logés avec jeu dans deux rainures (66) prévues à l'avant et de chaque côté de la gâchette (27) logée dans un évidement (55) de la poignée et étant ainsi solidaires de la gâchette, qui est montée pivotante à l'encontre de l'action d'un ressort (31) autour d'un axe fixe (28), qui traverse la poignée et la gâchette et sur lequel est aussi montée la seconde extrémité des ressorts (54), et l'axe mobile (30) traversant la gâchette (27), au sommet de la région antérieure de celle-ci, par une lumière permettant à cet axe un jeu vertical de quelques millimètres.

6. Dispositif suivant l'une quelconque des revendications 1 à 5, caractérisé en ce que le corps (3) de l'ustensile étant en verre ou en céramique, l'embout (6) en même matière est venu de moulage avec ce corps.

7. Dispositif suivant l'une quelconque des revendications 1 à 6, caractérisé en ce que l'embout (6) est placé à un niveau inférieur à celui du bord supérieur du corps (3).

8. Dispositif suivant l'une quelconque des revendications 1 à 7, caractérisé en ce que l'embout (6) et son logement (5c, 5d, 5f) dans la poignée (1c, 1d, 1f) ont une forme générale parallélépipédique, l'emboîtement étant ainsi sans rotation possible autour de l'axe de la poignée.

9. Dispositif suivant l'une quelconque des revendications 1 à 8, caractérisé en ce que ladite encoche (7) est formée sur la face supérieure de l'embout (6), le long de la ligne de raccordement de celui-ci avec la paroi latérale du corps (3) de l'ustensile.

10. Dispositif suivant l'une quelconque des revendications 1 à 9, caractérisé en ce que l'embout (6) a une forme compacte.

**Claims**

1. An arrangement for mounting a removable handle on the body of a kitchen tool comprising an end part (6) formed on the side wall of the body (3) of the tool, a housing (5c, 5d, 5f) provided at the end of a connector (2) for a handle (1c, 1d, 1f) into which said end part (6) can be inserted with gentle friction, and a locking arrangement mounted inside said housing and comprising a pivoting part and means able to pivot such part, the upper face of the end part (6) being provided with a notch (7), one of the ends of the pivoting part (24, 34) being bent in the shape of a beak (2, 42) able to fit into the notch of the end part, the means capable of pivoting such part being arranged to bring the curved end into the notch and to lock the part into position or to unlock it according to whether the handle is to be put on or removed, and said end part (6) being submitted, in the locked position, to compression between the pivoting part and the lower face of the housing (5c, 5d, 5f) provided at the end of the connector (2) for the handle, characterised in that said pivoting part is a link in the form of a catch (24 or 34) located at one end of an assembly of links known as a toggle joint, in that said locking means are made up of other links (25, 26, 27 ; or 35, 36 ; or 25, 54, 27) of the assembly, one of the links being in the form of a trigger lever (27 or 36) and acting as a locking lever in opposition to the action of a restoring spring (31 or 41), and in that there is provided a release push button (44 or 43 or 61) which, when pressed, exerts a downwards pressure on the locking lever, thus triggering the break-up of the jamming of the toggle joint links.

2. An arrangement according to Claim 1, characterised in that it additionally comprises a safety mechanism for holding the handle (1f) in a locked position, comprising a release push button (61-60) of a particular structure including a bolt (60) roughly in the shape of a parallelepiped, which has a projecting cylindrical upper face (60a) in its front part and a lower face (62) in the shape of a truncated cone, and, on the other side, a slightly concave lateral face (60b) whose curvature centre is the articulation axis (28) of the trigger lever (27) on the handle, and additionally including a housing of a shape co-operating with the trigger lever (27) by means of such a push button, this housing comprising a transverse passage (56) in the shape of a truncated cone having a release part (59) and extending into a cylindrical passage (57) which, in its turn, is joined to the upper part of the trigger lever by means of an inclined plane (58), said bolt (60), which can be operated by the push button head (61) being able to rotate in the passage (56) in the shape of a truncated cone by means of its lower face (62) in the shape of a truncated cone once the handle has been locked on, until it engages and butts upon said release part (59) via its projecting cylindrical upper face (60a) in order to ensure that the handle safety mechanism locks in position.

3. An arrangement according to Claim 2, characterised in that the head (61) of the push button is in the shape of a button, either a simple screw head or nut or the wing type, projecting on the side of the handle (1f).

4. An arrangement according to either Claim 2 or 3, characterised in that a return spring (64) is associated with the push button button (61-60).

5. An arrangement according to any one of Claims 1 to 4, characterised in that the assembly of links known as a toggle joint comprises, in the function of a linkage acting as locking means, two small links (25) articulated by a first moving axis (29) at the back of the catch (24) on either side of same, and two springs (54) in the shape of a double S connected by one of their curved ends to the rear end of the small links (25) through a second moving axis (30), these two springs being located with play inside two grooves (66) provided at the front and on either side of the trigger lever (27) housed in a recess (55) of the handle and thus being integral with the trigger itself, such trigger lever being mounted to pivot against the action of a spring (31) around a fixed axis (28) which passes through the handle and the trigger lever and on which there are also mounted the other ends of the springs (54), and the moving axis (30) traversing the trigger lever (27) at the top of its front area through an opening allowing the axis vertical play of a few millimeters.

6. An arrangement according to any one of Claims 1 to 5, characterised in that the body (3) of the tool is made of glass or ceramics and the end part (6) is in the same material and is moulded together with the body.

7. An arrangement according to any one of Claims 1 to 6, characterised in that the end part (6) is positioned at a lower level than the upper edge of the body (3).

8. An arrangement according to any one of Claims 1 to 7, characterised in that the end part (6) and its housing (5c, 5d, 5f) on the handle (1c, 1d, 1f) have a roughly parallelepiped shape, so that the housing cannot possibly rotate around the axis of the handle.

9. An arrangement according to any one of Claims 1 to 8, characterised in that the said notch (7) is formed on the upper face of the end part (6), along the line where it connects to the side wall of the tool body (3).

10. An arrangement according to any one of Claims 1 to 9, characterised in that the end part (6) has a compact form.

**Patentansprüche**

1. Befestigungseinrichtung für einen abnehmbaren Griff am Körper eines Küchengerätes, mit einem an der Seitenwand des Körpers ausgebildeten Vorsprung (6), einem Hohlraum (5c, 5d, 5f) der am Anschlußende (2) des Griffs (1c, 1d, 1f) vorgesehen ist und in welchen der Vorsprung mit leichter Reibung einführbar ist, und einer in dem Hohlraum angeordneten Riegelvorrichtung, die ein Schwenkteil und Mittel zum Schwenken des Schwenkteils aufweist, wobei die obere Fläche des Vorsprungs (6) mit einer Ausnehmung (7) versehen ist, das Schwenkteil (24, 34) mit einem abgewinkelten zungenartigen Ende (32, 42) für den Eingriff in die Ausnehmung des Vorsprungs und die Mittel zum Schwenken des Schwenkteils so angeordnet sind, daß sie das abgewinkelte Ende in die Ausnehmung einführen und das Teil in dieser Position verriegeln bzw. es für die Montage oder die Demontage des Griffs entriegeln, wobei der Vorsprung (6) in der Verriegelungsposition zwischen dem Schwenkteil und der unteren Fläche des am Anschlußende (2) des Griffs vorgesehenen Hohlraums (5c, 5d, 5f) eingespannt ist, dadurch gekennzeichnet, daß das Schwenkteil ein Hebel in Form einer Klinke (24 oder 34) ist, die an einem Ende einer als Kniehebelgestänge bezeichneten Anordnung von Hebelgliedern sitzt, daß die Verriegelungsmittel von den anderen Hebelgliedern (25, 26, 27 oder 35, 36 oder 25, 54, 27) der Anordnung gebildet werden, von denen eines in Form eines Drückers (27 oder 36) als Verriegelungshebel dient und gegen die Kraft einer Rückstellfeder (31 oder 41) wirkt, und daß ein Entriegelungsknopf (44 oder 43 oder 61) vorgesehen ist, der bei Betätigung einen abwärts gerichteten Druck gegen den Verriegelungshebel ausübt, wodurch die Freigabe der Verrastung der Hebelglieder des Kniegelenkgestänges ausgelöst wird.

2. Einrichtung nach Anspruch 1, dadurch gekennzeichnet, daß sie ferner einen Blockiermechanismus zum Sichern des Griffs (1f) in der Verriegelungsposition aufweist, bestehend aus einem Entriegelungsdruckknopf (61-60) von besonderer Formgebung mit einem im wesentlichen parallelepipedisch geformten Riegel (60), der in seinem vorderen Bereich eine vorspringende zylindrische obere Fläche (60a) und eine konische untere Fläche (62) sowie an einer Seite eine leicht konkave Seitenfläche (60b) aufweist, deren Krümmungsmittelpunkt in der Schwenkachse (28) des Drückerhebels (27) am Griff liegt, und weiter bestehend aus einem für das Zusammenwirken mit dem Druckknopf geformten Sitz in dem Drückerhebel (27), wobei der Sitz eine transversale konische Ausnehmung (56) mit einem Anschlag (59) aufweist und durch eine zylindrische Ausnehmung (57) verlängert ist, die ihrerseits über eine Rampe (58) mit dem oberen Bereich des Drückerhebels verbunden ist, wobei der Riegel (60), der über das Kopfteil (61) des Druckknopfes betätigbar ist, nach der Verriegelung des Griffes in der konischen Ausnehmung (56) über seine untere konische Fläche (62) drehen kann, bis er mit seiner oberen vorspringenden Fläche (60a) an dem Anschlag (59) der konischen Ausnehmung in Eingriff kommt und anschlägt, um die Sicherungsblockierung des Griffes in der Verriegelungsposition zu bewirken.

3. Einrichtung nach Anspruch 2, dadurch gekennzeichnet, daß der Kopfteil (61) des Druckknopfes die Form eines Knopfes, eines Schraubenkopfes oder einer Mutter von einfacher Form oder Flügelform aufweist, der an der Seite des Griffes (1f) vorspringt.

4. Einrichtung nach Anspruch 2 oder 3, dadurch gekennzeichnet, daß dem Druckknopf eine Rückstellfeder zugeordnet ist.

5. Einrichtung nach einem der Ansprüche 1-4, dadurch gekennzeichnet, daß das Kniegelenkgestänge als die Verriegelungsmittel bildende Hebelglieder zwei Laschen (25) aufweist, die an einer ersten beweglichen Achse (29) am hinteren Teil der Klinke (25) zu deren beiden Seiten angelenkt sind, und zwei Doppel-S-förmige Federn (54), die mit je einem ihrer gebogenen Enden mit den hinteren Enden der Laschen (25) über eine dazwischen liegende zweite bewegliche Achse (30) verbunden sind, wobei diese beiden Federn mit Spiel in zwei Nuten (66), die vorne und zu beiden Seiten an dem in einer Ausnehmung (55) des Griffs aufgenommenen Drückerhebel (27) ausgebildet sind, eingreifen und dadurch am Drückerhebel befestigt sind, der gegen die Kraft einer Feder (31) schwenkbar um eine feststehende Achse (28) gelagert ist, die quer durch den Griff und den Drückerhebel verläuft und auf der auch die zweiten Enden der Feder (54) befestigt sind, und wobei die bewegliche Achse (30) sich quer durch den Drückerhebel (27) am oberen Ende von dessen vorderen Bereich durch eine Öffnung erstreckt, die der Achse ein vertikales Spiel von einigen Millimetern erlaubt.

6. Einrichtung nach einem der Ansprüche 1-5, dadurch gekennzeichnet, daß der Körper (3) des Gerätes aus Glas oder Keramik ist und daß der aus dem gleichen Material bestehende Vorsprung (6) mit dem Körper zusammen geformt ist.

7. Einrichtung nach einem der Ansprüche 1-6, dadurch gekennzeichnet, daß der Vorsprung (6) tiefer als die Oberkante des Körpers (3) angeordnet ist.

8. Einrichtung nach einem der Ansprüche 1-7, dadurch gekennzeichnet, daß der Vorsprung (6) und der entsprechende Hohlraum (5c, 5d, 5f) im Griff (1c, 1d, 1f) im wesentlichen die Form eines Parallelepipeds aufweisen, so daß der Eingriff ohne Drehung um die Achse des Griffes möglich ist.

9. Einrichtung nach einem der Ansprüche 1-8, dadurch gekennzeichnet, daß die Ausnehmung (7) auf der oberen Fläche des Vorsprungs (6) entlang dessen Verbindungslinie mit der Seitenwand des Körpers (3) des Gerätes ausgebildet ist.

10. Einrichtung nach einem der Ansprüche 1-9, dadurch gekennzeichnet, daß der Vorsprung (6) eine kompakte Form aufweist.

## FIG_1

## FIG_2

## FIG_3

1

## FIG_4

## FIG_5

## FIG_6

FIG.7

FIG.8

FIG.9

## FIG_10

## FIG_11

## FIG_12